# EUROPEAN PATENT SPECIFICATION

(11) **EP 4 642 584 B1**
(45) Date of publication and mention of the grant of the patent: **02.12.2026**
(21) Application number: 23841542.6
(22) Date of filing: 21.12.2023
(51) Int. Cl.: B23Q 5/34, B23Q 39/04

(54) **APPARATUS FOR POSITIONING A TOOL FOR AUTOMATIC MACHINES**
VORRICHTUNG ZUM POSITIONIEREN EINES WERKZEUGS FÜR AUTOMATISCHE MASCHINEN
APPAREIL DE POSITIONNEMENT D'UN OUTIL POUR MACHINES AUTOMATIQUES

(30) Priority: 28.12.2022 IT 202200027003
(43) Date of publication of application: 05.11.2025
(73) Proprietor: Casoni, Silvio, 42019 Scandiano (RE) (IT); Abelzi, Daniele, 43125 Parma (IT)
(72) Inventor: CASONI, Silvio, 42019 Scandiano (RE) (IT)
(74) Representative: Silva, Valentina
(86) International application number: PCT/IB2023/063135
(87) International publication number: WO 2024/141899

(56) References cited:
- GB-A- 1 287 413
- US-A- 3 138 046
- US-A- 3 203 316

## Description

### FIELD OF APPLICATION OF THE INVENTION

The present invention refers to the sector of automatic plants for processing and/or treating and/or moving objects.

In particular, the present invention concerns an apparatus for positioning a tool for automatic machines comprising an actuating device of the mechanical type.

### BACKGROUND

The automatic plants for processing and/or treating and/or moving objects are known in various configurations of the prior art.

The continuous evolution of the industrial processes has led over time to the creation of processing systems capable of carrying out a plurality of operations for processing, moving and treating objects, in a completely automated manner.

In this description and in the appended claims, the term "object" is intended to generically indicate a manufactured article of any kind, both finished (for example products deriving from previous process steps or containers), and waiting for a subsequent processing step (for example semi-finished products).

The term "tool" means an element arranged for processing or treating or moving (e.g. picking up and releasing) an object.

In particular, the automated plants mentioned above may provide for several operating units intended for carrying out specific processes, possibly suitably divided into several processing stations generally served by a main supply system for supporting and moving the objects between the operating units themselves, according to a predefined path.

Each operating unit also comprises one or more processing devices arranged for a specific operation, such as for example operations of surface treatment, movement, filling of containers and still others.

These processing devices are provided with tools dedicated to the operation to be carried out, which interact with the objects that are brought to a work area served by the tool itself. Generally, one or more tools are connected to an actuating device, which controls their movement as well as their positioning with respect to the object subjected to the specific process. The actuating device may comprise one or more movable arms, actuated by means of a system of the pneumatic type or alternatively of the electrical type, based on the characteristics of the process to be carried out.

Near each operating unit or station, the main supply system can also be connected to local movement systems in which the objects are conveyed to carry out a specific process step and which can for example comprise moving belts, rotating tables, carousels, etc.

These plants are complex, as it is necessary to coordinate the movement of all the movement systems with that of the various devices intended for carrying out the different processings, actuated in succession in the stations that follow one another during the entire process.

The actuating devices also imply a considerable encumbrance given by the elements intended for supplying air or fluid, in the case of pneumatic or hydraulic actuation, as well as wiring - in the case of electric type actuation.

These configurations also entail an undesirable complexity in cleaning the plant, due to the number of the components, in particular of the elements intended for supplying the actuating devices, as well as in the maintenance of the same.

In addition, these configurations also involve a high complexity of assembly for the management of the power supply cables subjected to rotations or fast movements, with the need to insert additional components, such as cable-holding channel, to ensure an acceptable reliability over time. GB 1 287 413 A discloses an apparatus suitable for positioning a tool in automatic machines, comprising at least one actuating device, at least one movement device configured to set said at least one actuating device in motion, and at least one shaped guide.

### OBJECTS AND SUMMARY OF THE INVENTION

The problem at the basis of the present invention is to make available an apparatus for positioning a tool, in particular for automatic machines, structurally and functionally designed to overcome, at least in part, one or more of the limits set out above with reference to the cited prior art.

In particular, it is an object of the present invention to have an apparatus for positioning an efficient and versatile tool, adaptable to a variety of types of processes.

A further object of the present invention is to have an apparatus for positioning a tool that is simple to make and having a contained encumbrance.

Another object of the present invention is to have an apparatus for positioning a tool that involves easy maintenance, allowing to contain both the times and the costs for the execution of the same.

Finally, the object of the present invention is to have an apparatus for positioning a tool that is overall cheaper than the apparatuses of the prior art.

The problem and the objects indicated above are solved by the present invention by means of an apparatus for positioning a tool comprising one or more of the features set forth in the following claims.

In a first aspect thereof, the present invention is directed to an apparatus for positioning a tool in particular for automatic machines, comprising at least one actuating device, at least one movement device configured to set said at least one actuating device and at least one shaped guide in motion.

Preferably said actuating device is movable between a first rest configuration and a second engagement configuration and comprises a hollow body with an elongated shape, and a plunger configured to slide inside said hollow body.

Preferably the actuating device comprises a sliding element, integral with the actuating device, and configured to engage with a surface of said shaped guide.

Preferably, the actuating device comprises a first operating element configured to cooperate with a first opposite operating element so as to set said plunger and said hollow body in relative motion by means of attraction or repulsion forces of the magnetic type.

According to this solution, an apparatus for positioning a versatile tool is made available, as it is adaptable to multiple industrial processings, and at the same time with extremely contained encumbrance.

In addition, the apparatus thus made involves simple maintenance and is easily inspectable.

Preferably the shaped guide is shaped so as to have a surface that develops along a profile extending between an inlet portion and an outlet portion.

Preferably, the surface profile comprises an intermediate portion and is shaped so as to have a non-increasing monotonic trend between the inlet portion and said intermediate portion, and a non-decreasing monotonic trend between the intermediate portion and the outlet portion or vice versa.

Preferably, the sliding element comprises a movable element rotating about an axis X.

Preferably, the first operating element and the first opposite operating element are magnetic elements, preferably permanent magnets, preferably operating by means of magnetic attraction forces.

Preferably, the first operating element is integrally connected to the plunger, and the first opposite operating element is integrally connected to the hollow body.

Preferably, the first operating element is connected to the plunger at a lower end of the plunger.

Preferably, the first opposite operating element is integrally connected to the hollow body at a bottom portion of said hollow body.

Preferably, the actuating device comprises a second operating element and a second opposite operating element, configured to operate by means of magnetic-type repulsion forces, so as to set said plunger and said hollow body in relative translational movement, moving away from each other.

Preferably, the second operating element and the second opposite operating element are magnetic elements, preferably permanent magnets.

Preferably, the apparatus comprises a pushing device, configured to stress the plunger or the hollow body, such that the actuating device is brought towards said first rest configuration.

Preferably, said pushing device comprises an elastic element, preferably a spring.

Preferably, said pushing device is arranged inside the hollow body, coaxially and externally to the plunger.

Preferably, the first operating element and the first opposite operating element are configured so as to operate by magnetic repulsion forces.

Preferably, the sliding element is connected to the hollow body, in a position outside thereto.

Preferably, the sliding element is connected to the plunger, preferably at a preferably upper end thereof.

### BRIEF DESCRIPTION OF THE DRAWINGS

The invention will be described below with reference to some examples, provided for explanatory and non-limiting purposes, and illustrated in the annexed drawings. These drawings illustrate different aspects and embodiments of the present invention and reference numerals illustrating structures, components, materials and/or similar elements in different drawings are indicated by similar reference numerals, where appropriate.
Figure 1 shows a schematic perspective view in partial section of an apparatus for positioning a tool according to an embodiment of the present invention;
Figure 2 is a schematic view in partial section of a first assembly belonging to the apparatus of figure 1, in a first operating configuration;
Figure 3 is a schematic view in partial section of the assembly of figure 2, in a second operating configuration; and
Figure 4 is a view of an example of application of the apparatus for positioning a tool according to the invention, wherein said apparatus is used in a bottling machine.

### PREFERRED EMBODIMENT OF THE INVENTION

While the invention is susceptible to various modifications and alternative constructions, certain preferred embodiments are shown in the drawings and are described hereinbelow in detail.

The use of "for example", "etc.", "or" indicates non-exclusive alternatives without limitation, unless otherwise indicated. The use of "includes" means "includes, but not limited to" unless otherwise indicated.

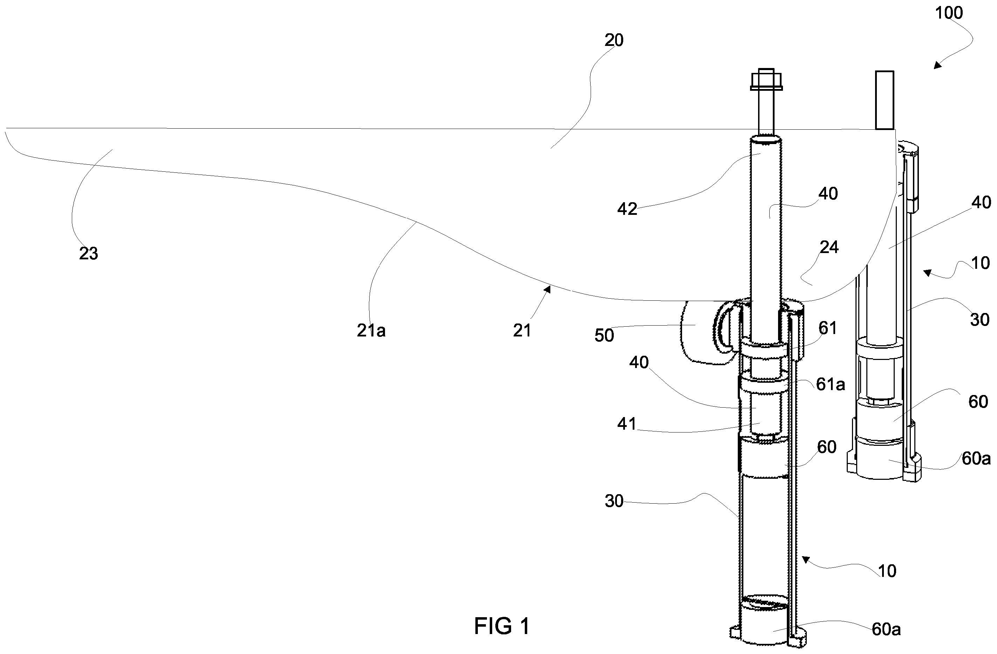

With reference to figure 1, 100 denotes overall an apparatus for positioning a tool, in particular for automatic machines, in accordance with the present invention.

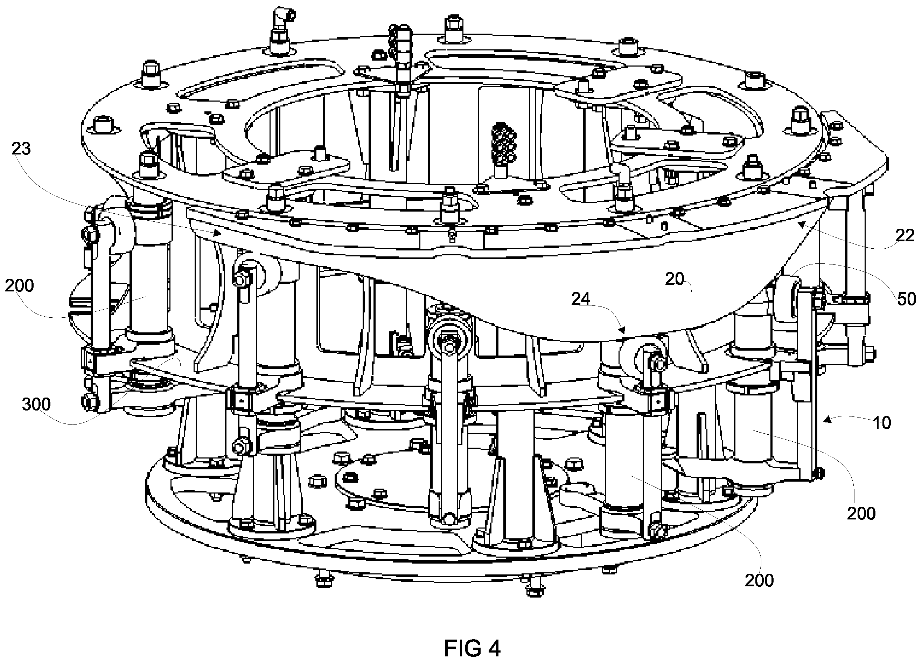

The apparatus 100 has an actuating device 10, configured to be connected to a tool 200 (shown by way of example in figure 4) made integral with the device 10 itself by suitable connection means.

Preferably, the tool 200 is removably connected to the hollow body 30.

According to an alternative embodiment, the tool 200 can be removably connected to the plunger 40 for example in the event that the plunger 40 is the one that translates.

The actuating device 10 is configured so that the association both with a single tool 200 and with several tools 200 is possible, depending on the type of machine with which it is associated, as well as on the specific processing/treatment needs or still based on the shape of the product with which the interaction is expected.

The apparatus 100 further comprises at least one movement device 300, for example the rotating table of a filling machine as depicted in figure 4, configured to set at least one actuating device 10 in motion.

Said movement device 300 may comprise rotating and/or translating members and may be connected to one or more actuating devices 10, so as to impose on them a motion along a trajectory that will be predetermined depending on the type of treatment/processing as well as the shape of the automatic machine to which the apparatus 100 is applied. For example, as shown in the application form exemplified in figure 4, the movement device comprises a rotating table to which a plurality of actuating devices 10 are connected, which are therefore set in rotation integrally with the rotary motion of the table itself.

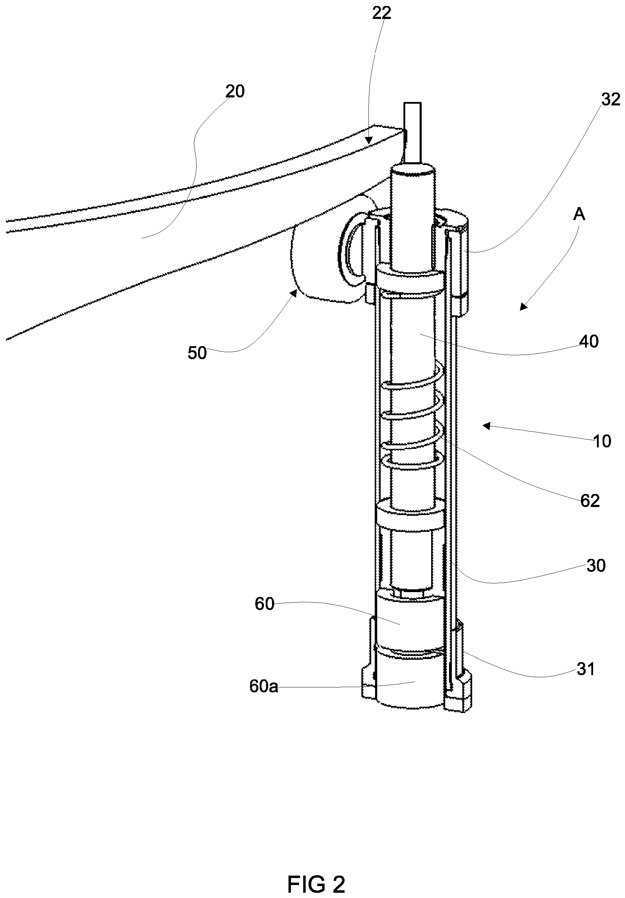

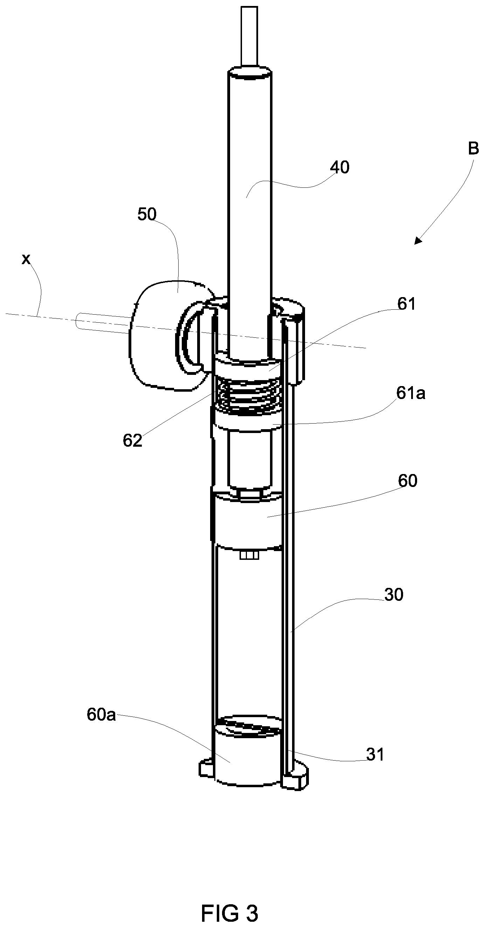

The actuating device 10 is further configured to be movable between a first rest configuration A (shown in figure 2) and a second engagement configuration B (shown in figure 3) in which the tool is arranged in a work area so as to interact with an object positioned at the same.

The actuating device 10 comprises a hollow body 30 with an elongated shape inside which a plunger 40 is accommodated, slidably movable inside the hollow body 30 itself, according to a substantially straight alternating motion. The relative sliding motion of the plunger 40 and the hollow body 30 is such as to actuate the actuating device 10 between the first rest configuration A and the second engagement configuration B.

The actuating device 10 further comprises a sliding element 50, which is preferably removably connected thereto and is configured to engage with a shaped guide 20.

In particular, said shaped guide 20 is shaped so as to have a surface 21 that develops along a profile, between an inlet portion 22 and an outlet portion 23.

The profile of the surface 21 may also have an intermediate portion 24.

Said intermediate portion 24 is preferably shaped so as to have a non-increasing monotonic trend between the inlet portion 22 and said intermediate portion 24, as well as a non-decreasing monotonic trend between the intermediate portion 24 and the outlet portion 23.

Said intermediate portion 24 could also be shaped so as to have a non-decreasing monotonic trend between the inlet portion 22 and said intermediate portion 24, as well as a non-increasing monotonic trend between the intermediate portion 24 and the outlet portion 23.

In the figures, a possible embodiment is depicted in which the sliding element 50 engages on the surface 21, in particular on the lower surface 21a.

Possible alternatives not depicted in the figure could provide that the sliding element 50 engages on an upper or side surface of the surface 21.

According to a first preferred configuration, shown in figure 1, the sliding element 50 is connected to the hollow body 30, in a position outside thereto, by means of dedicated connection means.

In the specific, non-binding case, the roller 50 is mechanically connected to the element 30 by means of a dedicated ring nut that guarantees its solidity.

According to a preferred configuration, shown in figure 1, the sliding element 50 is connected to the upper portion 32 of the hollow body 30.

According to such a configuration, the entire stroke of the plunger/cylinder in the actuation of the device is advantageously fully exploited.

According to an alternative configuration (not shown in the figures), the sliding element 50 is connected to the plunger 40, preferably at an end thereof, preferably the upper end 42, or the lower end 41.

Preferably, the sliding element 50 comprises a movable element rotating about an axis X, for example a disc or a cylindrical pin.

Preferably, said axis X is arranged according to a direction substantially perpendicular to the longitudinal axis of the plunger 40. In this way, a correct and stable contact between the sliding element 50 and the surface 21 of the shaped guide 20 is guaranteed, in addition to advantageously minimizing the stresses on the members adapted to connect the sliding element with the actuating device.

According to an alternative embodiment, the sliding element 50 can consist of a slide or skid, configured to operate resting on the surface 21 of the shaped guide 20 and allow it to slide thereon.

Advantageously, the actuating device 10 further comprises a first operating element 60 configured to cooperate with a first opposite operating element 60a, so as to set said plunger 40 and said hollow body 30 in relative motion by means of attraction or repulsion forces of the magnetic type.

According to a preferred embodiment, the first operating element 60 and the first opposite operating element 60a are magnetic elements, in particular permanent magnets.

In the embodiment depicted in the figure, the first operating element 60 and the first opposite operating element 60a preferably operate by means of magnetic attraction forces.

Alternatively, the first operating member 60 and the first opposite operating member 60a may consist of electromagnets.

In a preferred embodiment, as shown in figures 1 and 3, the first operating element 60 is integrally connected to the plunger 40, while the first opposite operating element 60a is arranged on the hollow body 30.

Preferably, the first operating element 60 is connected to the plunger 40 at a lower end 41 thereof.

Preferably, the first opposite operating element 60a is arranged at a bottom portion 31 of the hollow body 30.

According to this embodiment, the first operating element 60 and the first opposite operating element 60a operate by means of magnetic attraction forces, i.e. so as to move said plunger 40 closer to the bottom portion 31 of the hollow body 30, as depicted in figure 2.

According to an embodiment depicted in the figure, said first operating element 60 and first opposite operating element 60a are moved away contrasting the magnetic attraction force when the sliding element 50 engages with the intermediate portion 24, in particular with the portion with a non-increasing monotonous trend.

Preferably, said first operating element 60 and first opposite operating element 60a are moved closer in accordance with the magnetic attraction force when the sliding element 50 engages with the intermediate portion 24, in particular with the portion with a non-decreasing monotonic trend.

The apparatus 100 may further comprise additional operating elements, which cooperate in the operation of the actuating device 10 in order to increase its actuating stability and precision.

For example, as shown in figures 1 and 3, the actuating device 10 can provide a second operating element 61 and a second opposite operating element 61a, which are configured to operate preferably by means of magnetic-type repulsion forces, so as to set the plunger 40 and the hollow body 30 in relative translational movement, moving away from each other.

A preferred embodiment provides that the second operating element 61 and the second opposite operating element 61a are magnetic elements, in particular permanent magnets.

In this way, a correct and stable contact between the sliding element 50 with the surface 21 of the shaped guide 20 is guaranteed.

In fact, when the first operating element 60 and the first opposite operating element 60a are in such a distant position as to be affected by a minimum attractive force, this force is assisted by the repulsion force between the second operating element 61 and the second opposite operating element 61a.

This is due to the profile of the shaped guide 20 and above all to the quadratic variation of the magnetic forces as a function of the distance between the first operating element 60 and the first opposite operating element 60a, which are forced to move away from the shaped guide 20 in particular from the intermediate portion 24.

According to this configuration, the pushing stress that allows the actuating device 10 to be brought into the rest configuration is advantageously increased, albeit the particular context in which the actuating device 10 requires to operate by means of the first operating element 60 and the first opposite operating element 60a characterized by a contained magnetic force, for example in the event that it is necessary to contain the overall encumbrances and therefore the dimension of the operating elements 60, 60a themselves.

Or this also allows to handle large strokes of the actuating device 10, which go beyond the magnetic attraction force of the operating elements 60, 60a.

In a preferred embodiment, as shown in figures 1 and 3, the second operating element 61 is integrally connected to the plunger 40, while the second opposite operating element 61a is arranged on the hollow body 30.

Preferably, the second operating element 61 is connected to the plunger 40 at an intermediate zone, preferably near the lower end 41.

Preferably, the second opposite operating element 61a is arranged at an upper portion 32 of the hollow body 30.

In an alternative embodiment, the second operating element 61 and the second opposite operating element 61a may also be electromagnets.

Furthermore, as shown for example in figure 2, it is possible to provide for the use of a pushing device 62, configured to stress the plunger 40 or the hollow body 30, such that the actuating device 10 is brought towards the first rest configuration A.

Also in this aspect the object is to further ensure a correct and stable contact between the sliding element 50 with the surface 21 of the shaped guide 20.

According to this configuration, the pushing stress that allows the actuating device 10 to be brought into the rest configuration is advantageously increased, albeit the particular context in which the actuating device requires to operate by means of the first operating elements 60, 60a characterized by a contained magnetic force, for example in the event that it is necessary to contain the overall encumbrances and therefore the dimension of the operating elements 60, 60a themselves.

Or this also allows to handle large strokes of the actuating device 10, which go beyond the magnetic attraction force of the operating elements 60, 60a.

Preferably, said pushing device 62 consists of an elastic element, for example a spring. Preferably, said elastic device is arranged inside the hollow body 30, coaxially and externally to the plunger 40. In this way, elements outside the actuating device 10 are advantageously avoided, limiting the encumbrance thereof.

The use of a spring can also advantageously guarantee a correct alignment between the plunger 40 and the hollow body 30, during the movement thereof.

In use of the apparatus 100, one or more objects are positioned, by means of an automated system or by an operator, at the work area served by the positioning apparatus 100.

Following this, the movement device 300 is actuated so as to move the actuating device 10 along the shaped guide 20; during this movement, the sliding element 50 slides, in contact with the surface 21 in particular with the lower surface 21a, of the guide 20, starting from the inlet portion 22, along the intermediate portion 24 to finally move into the outlet portion 23.

The movement of the movement device 300 is managed by a control unit (not shown in the figures) between a plurality of positions, said control unit being configured at least to determine the displacement speeds of the movement device 300, as well as to adjust the stopping times between one position and the next one.

From an operational point of view, the variation in the height of the profile of the lower surface 21 between the inlet portion and the intermediate portion 24 involves the relative sliding between the hollow body 30 and the plunger 40 so that the tool 200 places itself in the work area.

Following the completion of the step of treatment or processing on the object arranged in the work area, the movement device 300 is again set in motion so as to bring the actuating device 10 towards the outlet portion 23.

Advantageously, the mode of operation of the apparatus 100 is of an exclusively mechanical type; this peculiarity makes it possible to have a simple apparatus with reduced encumbrance, maintaining the reliability in the positioning of the tools in the work areas high.

The apparatus 100 is also extremely versatile, as it can be made so as to adapt the elements that compose it according to the type of tools 200 used by it, as well as to the objects that are brought into the work area for the particular treatment.

The invention thus conceived is susceptible to several modifications and variations, all falling within the scope of the inventive concept.

For example, it is possible to provide the same functions, by arranging the first operating element 60 and the first opposite operating element 60a so as to operate by magnetic repulsion forces.

Moreover, all the details can be replaced by other technically equivalent elements. In practice, the materials used, as well as the contingent shapes and sizes, can be whatever according to the requirements without for this reason departing from the scope of protection of the following claims.

## Claims

1. Apparatus (100) for positioning a tool (200) in particular for automatic machines, comprising
- at least one actuating device (10);
- at least one movement device (300) configured to set said at least one actuating device (10) in motion;
- at least one shaped guide (20);
wherein said actuating device (10) is movable between a first rest configuration (A) and a second engagement configuration (B) and comprises
- a hollow body (30) with an elongated shape;
- a plunger (40) configured to slide inside said hollow body (30);
- a sliding element (50), integral with the actuating device (10), and configured to engage with a surface (21) of said shaped guide (20);
- a first operating element (60) configured to cooperate with a first opposite operating element (60a) so as to set said plunger (40) and said hollow body (30) in relative motion by means of attraction or repulsion forces of the magnetic type.

2. Apparatus (100) according to claim 1, wherein said shaped guide (20) is shaped so as to have a preferably lower surface (21) that develops along a profile extending between an inlet portion (22) and an outlet portion (23).

3. Apparatus (100) according to claim 2, wherein the surface profile (21) comprises an intermediate portion (24) and is shaped so as to have a non-increasing monotonic trend between the inlet portion (22) and said intermediate portion (24), and a non-decreasing monotonic trend between the intermediate portion (24) and the outlet portion (23) or vice versa.

4. Apparatus (100) according to any one of the preceding claims, wherein the sliding element (50) comprises a movable element rotating about an axis X.

5. Apparatus (100) according to any one of the preceding claims, wherein the first operating element (60) and the first opposite operating element (60a) are magnetic elements, preferably permanent magnets, preferably operating by means of magnetic attraction forces.

6. Apparatus (100) according to any one of the preceding claims, wherein the first operating element (60) is integrally connected to the plunger (40), and the first opposite operating element (60a) is integrally connected to the hollow body (30).

7. Apparatus (100) according to any one of the preceding claims, wherein the first operating element (60) is connected to the plunger (40) at a lower end (41) of the plunger (40).

8. Apparatus (100) according to any one of the preceding claims, wherein the first opposite operating element (60a) is integrally connected to the hollow body (30) at a bottom portion (31) of said hollow body (30).

9. Apparatus (100) according to any one of the preceding claims, wherein the actuating device (10) comprises a second operating element (61) and a second opposite operating element (61a), configured to operate by means of magnetic-type repulsion forces, so as to set said plunger (40) and said hollow body (30) in relative translational movement, moving away from each other.

10. Apparatus (100) according to claim 9, wherein the second operating element (61) and the second opposite operating element (61a) are magnetic elements, preferably permanent magnets.

11. Apparatus (100) according to any one of the preceding claims, comprising a pushing device (62), configured to stress the plunger (40) or the hollow body (30), such that the actuating device (10) is brought towards said first rest configuration (A).

12. Apparatus (100) according to claim 11, wherein said pushing device (62) comprises an elastic element, preferably a spring.

13. Apparatus (100) according to claim 11 or 12, wherein said pushing device (62) is arranged inside the hollow body (30), coaxially and externally to the plunger (40).

14. Apparatus (100) according to any one of the preceding claims, wherein the first operating element (60) and the first opposite operating element (60a) are configured so as to operate by magnetic repulsion forces.

15. Apparatus (100) according to any one of the preceding claims, wherein the sliding element (50) is connected to the hollow body (30), in a position outside thereto and wherein the sliding element (50) is connected to the plunger (40), preferably at an upper end (42) thereof.

## Patentansprüche

1. Vorrichtung (100) zum Positionieren eines Werkzeugs (200), insbesondere für automatische Maschinen, umfassend
- mindestens eine Betätigungseinrichtung (10);
- mindestens eine Bewegungseinrichtung (300), die so konfiguriert ist, dass sie die genannte mindestens eine Betätigungseinrichtung (10) in Bewegung setzt;
- mindestens eine profilierte Führung (20);
wobei die Betätigungseinrichtung (10) mobil zwischen einer ersten Ruhekonfiguration (A) und einer zweiten Kopplungskonfiguration (B) und umfasst
- einen hohlen Körper (30) von länglicher Form ;
- einen Kolben (40), der so konfiguriert ist, dass er sich im Inneren des Hohlkörpers (30) gleitet;
- ein Gleitelement (50), das integral mit der Betätigungseinrichtung (10) verbunden ist und derart konfiguriert ist, um einer Oberfläche (21) der profilierten Führung (20) in Eingriff zu stehen;
- ein erstes Betätigungselement (60), das mit einem ersten gegenüberliegenden Betätigungselement (60a) zusammenwirkt, um den Kolben (40) und den Hohlkörper (30) mittels magnetischer Anziehungs- oder Abstoßungskräfte in Relativbewegung zu versetzen.

2. Vorrichtung (100) nach Anspruch 1, wobei die profilierte Führung (20) so geformt ist, dass sie vorzugsweise eine untere Oberfläche (21), die sich entlang eines Profils ausbildet, das sich zwischen einem Einlassabschnitt (22) und einem Auslassabschnitt (23) erstreckt.

3. Vorrichtung (100) nach Anspruch 2, wobei das Oberflächenprofil (21) einen Zwischenabschnitt (24) umfasst und so profiliert ist, dass es zwischen dem Einlassabschnitt (22) und dem Zwischenabschnitt (24) einen nicht steigenden monotonen Trend aufweist und zwischen dem Zwischenabschnitt (24) und dem Auslassabschnitt (23) einen nicht fallenden monotonen Trend aufweist oder umgekehrt.

4. Vorrichtung (100) nach einem der vorhergehenden Ansprüche, wobei das Gleitelement (50) ein bewegliches Element umfasst, das sich um eine X-Achse dreht.

5. Vorrichtung (100) nach einem der vorhergehenden Ansprüche, wobei das erste Betätigungselement (60) und das erste gegenüberliegende Betätigungselement (60a) magnetische Elemente, vorzugsweise Permanentmagnete, sind, die vorzugsweise durch magnetische Anziehungskräfte wirken.

6. Vorrichtung (100) nach einem der vorhergehenden Ansprüche, wobei das erste Betätigungselement (60) integral mit dem Kolben (40) und der erste gegenüberliegende Betätigungselement (60a) integral mit dem Hohlkörper verbunden (30).

7. Vorrichtung (100) nach einem der vorhergehenden Ansprüche, wobei das erste Betätigungselement (60) mit dem Kolben (40) an einem unteren Ende (41) des Kolbens (40) verbunden ist.

8. Vorrichtung (100) nach einem der vorhergehenden Ansprüche, wobei das erste gegenüberliegende Betätigungselement (60a) integral mit dem Hohlkörper (30) an einem unteren Abschnitt (31) des Hohlkörpers (30) verbunden ist.

9. Vorrichtung (100) nach einem der vorhergehenden Ansprüche, wobei die Betätigungseinrichtung (10) ein zweites Betätigungselement (61) und ein zweites gegenüberliegendes Betätigungselement (61a) umfasst, die mittels magnetischer Abstoßungskräfte so konfiguriert sind, dass sie den Kolben (40) und den Hohlkörper (30) in eine relative Translationsbewegung voneinander weg versetzen.

10. Vorrichtung (100) nach Anspruch 9, wobei das zweite Betätigungselement (61) und das zweite gegenüberliegende Betätigungselement (61a) aus magnetischen Elementen, vorzugsweise Permanentmagneten, bestehen.

11. Vorrichtung (100) nach einem der vorhergehenden Ansprüche, umfassend eine Schiebeinrichtung (62), die so konfiguriert ist, dass sie auf den Kolben (40) oder den Hohlkörper (30) eine Spannung ausübt, die dazu führt, dass die Betätigungseinrichtung (10) in Richtung der ersten Ruhekonfiguration (A) bewegt wird.

12. Vorrichtung (100) nach Anspruch 11, wobei die Schiebeeinrichtung (62) ein elastisches Element, vorzugsweise eine Feder, umfasst.

13. Vorrichtung (100) nach Anspruch 11 oder 12, wobei die Schiebeeinrichtung (62) im Inneren des Hohlkörpers (30), koaxial und außerhalb des Kolbens (40), angeordnet ist.

14. Vorrichtung (100) nach einem der vorhergehenden Ansprüche, wobei das erste Betätigungselement (60) und das erste gegenüberliegende Betätigungselement (60a) so konfiguriert sind, dass sie durch magnetische Abstoßkräfte betätigt werden.

15. Vorrichtung (100) nach einem der vorhergehenden Ansprüche, wobei das Gleitelement (50) mit dem Hohlkörper (30), in einer externen Position zu diesem, verbunden ist, wobei das Gleitelement (50) mit dem Kolben (40), vorzugsweise an einem oberen Ende (42) desselben, verbunden ist.

## Revendications

1. Appareil (100) de positionnement d'un outil (200), notamment pour machines automatiques, comprenant
- au moins un dispositif d'actionnement (10);
- au moins un dispositif de mouvement (300), configuré pour mettre en mouvement ledit au moins un dispositif d'actionnement (10);
- au moins un guide profilé (20);
dans lequel ledit dispositif d'actionnement (10) est mobile entre une première configuration de repos (A) et une deuxième configuration d'engagement (B) et comprend
- un corps creux (30) en forme allongée;
- un piston (40) configuré pour coulisser à l'intérieur dudit corps creux (30);
- un élément coulissant (50), faisant partie intégrante du dispositif d'actionnement (10), et configuré pour s'engager avec une surface (21) dudit guide profilé (20);
- un premier élément de commande (60), configuré pour coopérer avec un premier élément de commande opposé (60a) de manière à mettre ledit piston (40) et ledit corps creux (30) en mouvement relatif au moyen de forces d'attraction ou de répulsion magnétiques.

2. Appareil (100) selon la revendication 1, dans lequel ledit guide profilé (20) est configuré de manière à présenter de préférence une surface inférieure (21) qui se développe le long d'un profil qui s'étend entre une partie d'entrée (22) et une partie de sortie (23).

3. Appareil (100) selon la revendication 2, dans lequel le profil de surface (21) comprend une partie intermédiaire (24) et est configuré de manière à présenter une tendance monotone non croissante entre la partie d'entrée (22) et ladite partie intermédiaire (24), et une tendance monotone non décroissante entre la partie intermédiaire (24) et la partie de sortie (23) ou vice versa.

4. Appareil (100) selon l'une quelconque des revendications précédentes, dans lequel l'élément coulissant (50) comprend un élément mobile tournant autour d'un axe X.

5. Appareil (100) selon l'une quelconque des revendications précédentes, dans lequel le premier élément de commande (60) et le premier élément de commande opposé (60a) sont des éléments magnétiques, de préférence des aimants permanents, fonctionnant de préférence par des forces d'attraction magnétiques.

6. Appareil (100) selon l'une quelconque des revendications précédentes, dans lequel le premier élément de commande (60) est relié intégralement au piston (40) et le premier élément de commande opposé (60a) est relié intégralement au corps creux (30).

7. Appareil (100) selon l'une quelconque des revendications précédentes, dans lequel le premier élément de commande (60) est relié au piston (40) à une extrémité inférieure (41) du piston (40).

8. Appareil (100) selon l'une quelconque des revendications précédentes, dans lequel le premier élément de commande opposé (60a) est intégralement relié au corps creux (30), au niveau d'une partie inférieure (31) dudit corps creux (30).

9. Appareil (100) selon l'une quelconque des revendications précédentes, dans lequel le dispositif d'actionnement (10) comprend un deuxième élément de commande (61) et un deuxième élément de commande opposé (61a), configurés pour fonctionner au moyen de forces de répulsion de type magnétique, de manière à mettre ledit piston (40) et ledit corps creux (30) en mouvement de translation relatif, s'éloignant loin de l'autre.

10. Appareil (100) selon la revendication 9, dans lequel le deuxième élément de commande (61) et le deuxième élément de commande opposé (61a) sont des éléments magnétiques, de préférence des aimants permanents.

11. Appareil (100) selon l'une quelconque des revendications précédentes, comprenant un dispositif de poussée (62), configuré pour exercer une contrainte sur le piston (40) ou sur le corps creux (30), de manière à amener le dispositif d'actionnement (10) vers ladite première configuration de repos (A).

12. Appareil (100) selon la revendication 11, dans lequel ledit dispositif de poussée (62) comprend un élément élastique, de préférence un ressort.

13. Appareil (100) selon la revendication 11 ou 12, dans lequel ledit dispositif de poussée (62) est disposé à l'intérieur du corps creux (30), de manière coaxiale et à l'extérieur du piston (40).

14. Appareil (100) selon l'une quelconque des revendications précédentes, dans lequel le premier élément de commande (60) et le premier élément de commande opposé (60a) sont configurés pour fonctionner par des forces magnétiques répulsives.

15. Appareil (100) selon l'une quelconque des revendications précédentes, dans lequel l'élément coulissant (50) est relié au corps creux (30), en position extérieure à celui-ci, et dans lequel l'élément coulissant (50) est relié au piston (40), de préférence à une extrémité supérieure (42) de celui-ci.
